# EUROPEAN PATENT SPECIFICATION

(11) **EP 2 207 867 B1**
(45) Date of publication and mention of the grant of the patent: **19.03.2014**
(21) Application number: 07849696.5
(22) Date of filing: 18.10.2007
(51) Int. Cl.: C10B 53/00, B09B 3/00, F23G 5/027, F23G 5/34, F23G 5/40, F27B 11/00, C10B 1/02

(54) **WASTE DISPOSING PROCESS USING A REMOVABLE PYROLISATION SYSTEM**
ABFALLENTSORGUNGSVERFAHREN UNTER VERWENDUNG EINES ENTFERNBAREN PYROLISATIONSSYSTEMS
PROCÉDÉ D'ÉLIMINATION DES DÉCHETS EMPLOYANT UN SYSTÈME DE PYROLISATION AMOVIBLE

(43) Date of publication of application: 21.07.2010
(73) Proprietor: IN.SER. S.p.A., 10146 Torino (IT)
(72) Inventor: FAUSSONE, Elio, I-10146 Torino (IT)
(74) Representative: Garavelli, Paolo
(86) International application number: PCT/IT2007/000727
(87) International publication number: WO 2009/050748

(56) References cited:
- EP-A- 0 992 567
- IT-B- 1 260 666
- US-A- 1 675 315
- DATABASE EPODOC EUROPEAN PATENT OFFICE, THE HAGUE, NL; XP002493334 & IT 1 264 040 B (SERVIZI ECOLOGICI SPA) 9 September 1996 (1996-09-09) cited in the application

## Description

The present invention refers to a disposal process using a removable pyrolisation system.

As known, in some recent criteria for disposing solid urban wastes, it is provided for successively forming containing chambers inside a disposal tank, for forcedly introducing compacted and/or triturated wastes in such chambers and for airtightly sealing them till the tank itself was completely filled-in.

In general, the above containing chambers are formed of sheets of thermo-weldable polymeric material, typically polythene, and are flanked and overlapped one following the other.

Some systems for the heat treatment of solid urban wastes present in disposal tanks are known. In particular, patents n. IT-67286-A/90 and IT-A-TO93A00557 of Servizi Ecologici s.p.a. disclose systems in which it is provided, after a suitable maturing time, to dismantle the tank and recover the composted material to transfer it to treatment centers that are able to exhaust it with chemical and/or thermal transformations that allow separating an organic residue, aimed for example for agriculture, and the recovery of thermal energy, even if in very small amounts. The dismantled tank is then re-used, after having restored the containing chambers, for depositing a new load of wastes. This known waste disposing method, after composting in the above airtightly sealed tanks, is however labour intensive and economically unsatisfactory, because the yield in terms of recovered energy and recycled organic material is very low in comparison with the costs for installing and managing the treatment plant and the costs for dismantling the tanks and transporting the composted wastes.

In order to solve some of the above system problems, patent IT-A-TO93A000557, always of Servizi Ecologici s.p.a., discloses heat treatment plant, with energy recovery, for solid urban wastes in a disposal tank and its managing process. In particular, such plant provides for the use of a heating bell, capable of being transferred, therefore equipped with at least one high-temperature heat source that is able to produce a pyrolisis reaction, suspended to a removable trellis, that allows lowering the bell to an operating position thereof in contact with a surface layer of wastes contained in a disposal tank, in order to be able to pyrolise in situ the wastes in individual tank areas by simply displacing the bell. Such plant however has some problems; in particular, it has no means or systems that guarantee the bell air-tightness. As known, however, pyrolisis is a thermochemical decomposition process of organic substances obtained by applying heat, that must occur with a complete absence of an oxidising agent, normally oxygen, to perform a thermally induced homolysis. Consequently, due to possible blows-by of external air inside the known bell when performing the pyrolysis reaction, flames could be generated, such as not only to corrupt the reaction efficiency, but even to place risks on the plant integrity and the safety of the personnel responsible for its operation. Moreover, the known bell, though for its operation it is provided that, due to its own weight, it descends inside the tank area by pyrolysing subsequent layers of wastes, it is not equipped with any means adapted to reliably guide such descent: it can therefore happen that, during the descent, the bell gets caught or descends slanted, due, for example, to a non-homogeneous arrangement of layers of wastes, again allowing entry of air inside the bell or preventing the correct operation of the disposal process.

Therefore, object of the present invention is solving the above prior art problems, by providing a disposal process by using a removable pyrolisation system.

The above and other objects and advantages of the invention, as will result from the following description, are obtained with a disposal process by using a removable pyrolisation system as described in claim 1.

Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described without departing from the scope of the invention as appears from the enclosed claims.

The present invention will be better described by some preferred embodiments thereof, provided as a non-limiting example, with reference to the enclosed drawings, in which:
- FIG. 1 shows a side sectional view of a preferred embodiment of the pyrolisation system according to the present invention; eand

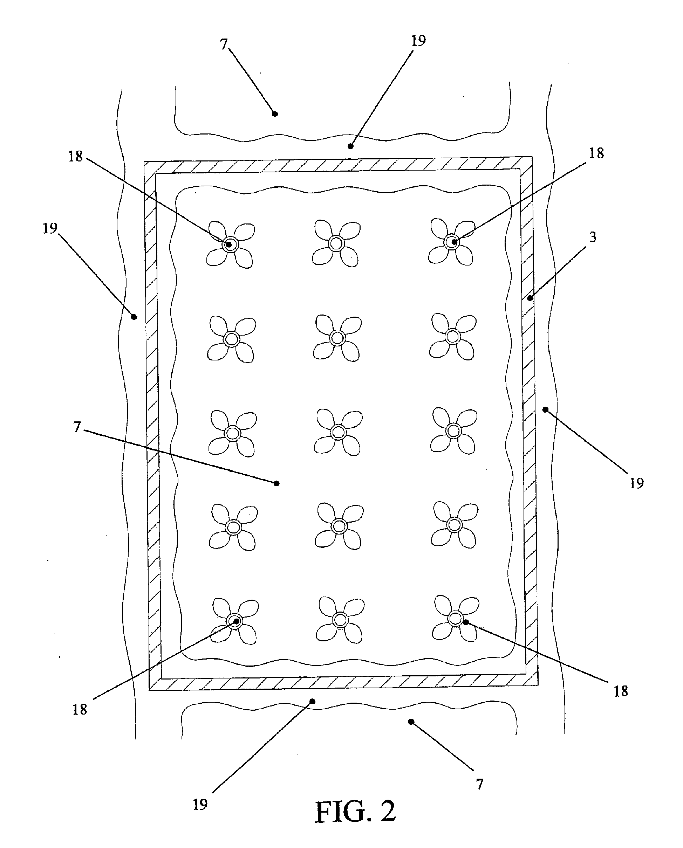

- FIG. 2 shows a schematic top view of the pyrolisation system of FIG. 1.

In general, with reference to the Figures, the system 1 used according to the present invention comprises at least one heating bell 3 capable of being transferred adapted to define at least one pyrolysation chamber 5 in order to subject to a pyrolysis reaction individual waste areas 7, such as for example those belonging to a disposal tank 9, as descried in the previously mentioned prior art patents. In particular, the heating bell 3 capable of being transferred is preferably composed of at least one layer of refractory material, suitable to support operating temperatures higher than 800-900°C, and is equipped with high-temperature heating means of the pyrolysation chamber 5: in a preferred embodiment of the use of system 1, the heating means comprise at least one electric resistance 11, or preferably a plurality of electric resistances 11 placed in series or in batteries inside at least one hollow space 13 defined by an internal wall 15a and an external wall 15b of the bell 3, such internal wall 15a being made of thermally conducting, preferably metallic, material and such external wall 15b being made of the refractory material. To obtain the most efficient high-temperature heating inside the pyrolysation chamber 5, the electric resistances 11 are preferably placed in contact with the internal wall 15a of the bell 3. To guarantee a suitable thermal insulation of the pyrolysation chamber, between the internal wall 15a and the external wall 15b of the bell 3 it is possible to provide for the introduction of at least one insulating layer 17 of a suitable material.

In a possible alternative, the heating means can be made as at least one plasma-type torch (not shown) substantially of a known type. It is however wholly evident that the heating means can be made in any other shape without anyway departing from the scope of the present invention.

In order to guarantee a better homogeneity in the area 7 to be treated of the pyrolysis reaction inside the pyrolysation chamber 5 and to move the compacted wastes in the area 7 to be treated, the bell 3 is equipped with at least one automatic mixer 18, for example externally actuated by at least one electric motor 22, adapted to re-circulate the reaction gases inside the pyrolysation chamber 5 itself.

The bell 3 is then equipped with at least one withdrawal duct 27 of pyrolysis gases produced inside the pyrolysation chamber 5. The system 1 according to the present invention can therefore comprise at least one energy user (not shown) such as, for example, a power unit, a gas turbine or an alternative motor, supplied by the withdrawal duct 27 with the pyrolysis gas for producing electric energy.

As known, depending on type and nature of wastes to be subjected to pyrolysis, as result of the reaction, other potentially dangerous or damaging substances could also be produced, in addition to synthesis gases: in order to neutralise or better control such substances, the withdrawal duct 27 could be equipped with at least one filter with reagents, suitably chosen depending on the provided substance to be neutralised, through which the pyrolysis gas produced in the pyrolysation chamber 5 can be made flow. Alternatively or additionally, the bell 3 could also be equipped with at least one entry duct 29 of one or more neutralising reagents, also in this case suitably chosen depending on the provided substance to be neutralised, inside the pyrolysation chamber 5.

Once having therefore delimited an area 7 to be subjected to pyrolysis through the use of system 1 according to the present invention, for example through grooves 19 with suitable sizes and depth obtained through an excavator in the disposal tank 9, it is enough to descend the bell 3 with its walls inside the grooves 19 in order to contain the waste area 7 inside the pyrolysation chamber 5. Obviously, to allow moving the bell 3, this latter one is equipped with fastening and moving means, made for example as at least one hook 20 placed on its top, to which it is possible to secure the lifting and moving means, such as for example a cable of a crane, an arm of an excavator, etc.

To guarantee a suitable seal against possible air seepages inside the pyrolysation chamber 5, between the external surface of the bell 3 and the walls surrounding the grooves 19, it is possible to place at least one layer of insulating material: in particular, preferably, such layer of insulating material is made as at least one bentonite kerb or plug 21.

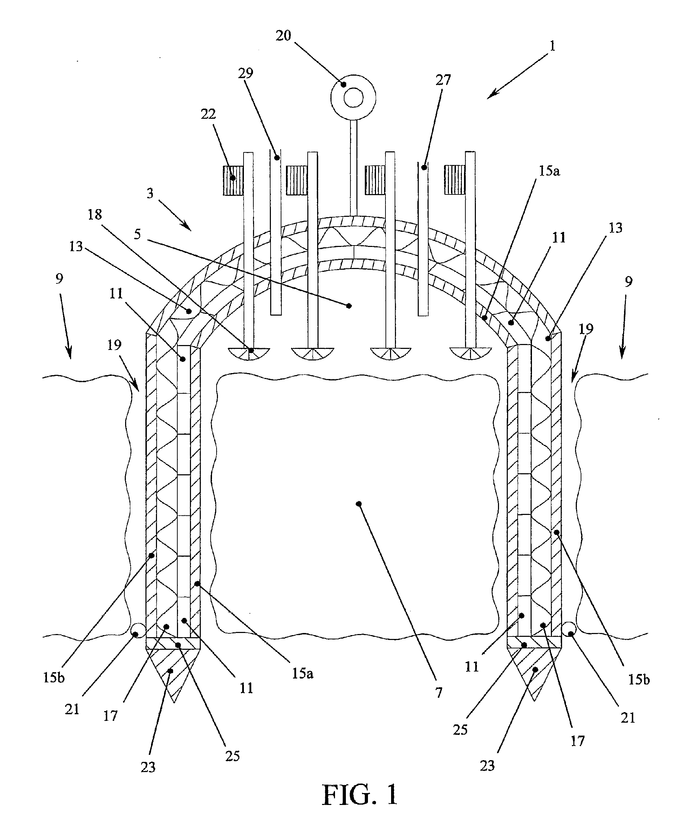

Moreover, always to guarantee a suitable seal against possible air seepages inside the pyrolysation chamber 5, on its lower part the bell 3 can be equipped with catching and anchoring means to wastes being present on the groove 19 bottom. Preferably, as shown for example in FIG. 1, such catching and anchoring means are made as at least one sharpened or pointed edge 23 placed on the lower perimeter edge 25 of the bell 3. It is wholly clear that such means can be made in any other shape without anyway departing from the scope of the present invention.

The present invention refers to a disposal process for solid urban wastes in disposal tanks using a removable pyrolisation system like the previously described one. In particular, the process according to the present invention comprises the steps of:
a) delimiting at least one pyrolysation area 7 in the disposal tank 9 through perimeter grooves 19, such area 7 having sizes and shape that are compatible with the pyrolysation chamber 5 defined by the pyrolisation bell 3 capable of being trasferred;
b) descending the pyrolysation bell 3 capable of being transferred to its operating position above the area 7 to be treated;
c) between the external surface of the bell 3 and the surrounding walls of the grooves 19, arranging the layer of insulating material as, for example, at least one bentonite kerb or plug 21;
d) activating the high-temperature heating means of the pyrolysation chamber 5, for example by energising the electric resistances 11; at that time, the pyrolysis reaction of wastes in area 7 begins;
e) activating the mixers 18 in order to re-circulate the reaction gases inside the pyrolysation chamber 5 and move the compacted wastes in the area 7 to be treated;
f) simultaneously withdrawing the pyrolysis gases produced by the pyrolysation chamber 5 through the withdrawal duct 27; possibly inserting the neutralising agents inside the pyrolysation chamber 5 through the entry duct 29;
g) after having ended the pyrolysis reaction of the area 7, lifting and moving the pyrolysing bell 3 capable of being transferred; and
h) repeating the previous steps for a new area 7 of the disposal tank 9, for example an area 7 adjacent to the previously treated one.

## Claims

1. Disposing process for solid urban wastes in disposal tanks (9) by using a removable pyrolisation system (1) in particular for the "in situ" heat treatment of solid urban wastes in disposal tanks (9) with energy recovery, said removable pyrolisation system (1) comprising at least one heating bell (3) capable of being transferred adapted to define at least one pyrolysation chamber (5) to subject to a pyrolysis reaction individual areas (7) of said wastes, said heating bell (3) capable of being transferred being preferably composed of at least one layer of a material resisting to high temperatures and equipped with high-temperature heating means of said pyrolysation chamber (5), **characterised in that** it comprises the steps of:
a) delimiting at least one of said pyrolysation areas (7) in said disposal tank (9) through perimeter grooves (19), said area (7) having sizes and shape compatible with said pyrolysation chamber (5) defined by said pyrolysing bell (3) capable of being transferred;
b) descending said pyrolysing bell (3) capable of being transferred to its operation position above said area (7) to be treated;
c) between said external surface of said bell (3) and said surrounding walls of said grooves (19), arranging said layer of insulating material;
d) activating said high-temperature heating means of said pyrolysation chamber (5) and starting said pyrolysis reaction of said wastes in said area (7);
e) activating mixers (18) to re-circulate said reaction gases inside said pyrolysation chamber (5) and to move said compacted wastes in said area (7) to be treated;
f) simultaneously withdrawing said pyrolysis gases produced in said pyrolysation chamber (5) through said withdrawal duct (27);
g) after having ended said pyrolysis reaction of said area (7), lifting and moving said pyrolysing bell (3) capable of being transferred; and
h) repeating the previous steps for a new area (7) of said disposal tank (9).

2. Process according to claim 1, **characterised in that** said step d) comprises the step of energising electric resistances (11).

3. Process according to claim 1, **characterised in that** it comprises the step of inserting neutralising reagents inside said pyrolysation chamber (5) through said entry duct (29).

## Patentansprüche

1. Entsorgungssystem für festen Haushaltsmüll in Entsorgungsgruben (9) mit Verwendung eines abnehmbaren Pyrolisierungssystem (1), insbesondere für die Wärmebehandlung "in situ" von festem Haushaltsmüll in Entsorgungsgruben (9) mit Energierückgewinnung, das genannte abnehmbare Pyrolisierungssystem (1) enthält mindestens ein übertragbares Erhitzungsgehäuse (3), das dazu dient, mindestens eine Pyrolisierungskammer (5) abzugrenzen, um einzelne Bereiche (7) der genannten Abfälle einer Pyrolysereaktion zu unterziehen, das genannte übertragbare Erhitzungsgehäuse (3) besteht vorzugsweise aus mindestens einer Schicht Material, das hohen Temperaturen widersteht, und ist mit Hochtemperatur-Erhitzungsvorrichtungen der genannten Pyrolisierungskammer (5) ausgestattet, und ist **dadurch gekennzeichnet, dass** es folgende Phasen einschließt:
a) Mindestens einen der genannten Pyrolisierungsbereiche (7) in der genannten Entsorgungsgrube (9) mit Umfangsfurchen (19) abgrenzen, der genannte Bereich (7) hat kompatible Abmessungen und Formen mit der genannten Pyrolisierungskammer (5), die vom übertragbaren Pyrolisierungsgehäuse (3) abgegrenzt wird;
b) Das genannte übertragbare Pyrolisierungsgehäuse (3) in die Betriebsposition über dem zu behandelnden Bereich (7) absenken;
c) Die genannte Schicht aus Isoliermaterial zwischen der genannten Außenfläche des genannten Gehäuses (3) und den genannten umgebenden Furchen (19) anbringen;
d) Die genannten Hochtemperatur-Erhitzungsvorrichtungen der genannten Pyrolisierungskammer (5) aktivieren, und die genannte Pyrolysereaktion der genannten Abfälle des genannten Bereiches (7) starten;
e) Die Mischer (18) aktivieren, um die genannten Reaktionsgase in der genannten Pyrolisierungskammer (5) in Umlauf zu bringen und die kompaktierten Abfälle im genannten zu behandelnden Bereich (7) zu entfernen;
f) Unmittelbar darauf die genannten Pyrolysegase, die in der genannten Pyrosierungskammer (5) erzeugt werden, mit der genannten Extraktionsleitung (27) extrahieren;
g) Nach Beendigung der genannten Pyrolysereaktion des genannten Bereiches (7) das genannte übertragbare Pyrolisierungsgehäuse (3) anheben und verschieben; und
h) Die vorhergehenden Phasen für einen neuen Bereich (7) der genannten Entsorgungsgrube (9) wiederholen.

2. Verfahren gemäß Patentanspruch 1, das **dadurch gekennzeichnet ist, dass** die genannte Phase d) die Phase zur Speisung der Heizwiderstände (11) einschließt.

3. Verfahren gemäß Patentanspruch 1, das **dadurch gekennzeichnet ist, dass** es die Einführungsphase der Neutralisierungsreagenzien in die genannte Pyrolisierungskammer (5) mit der genannten Einführleitung (29) einschließt.

## Revendications

1. Procédure d'élimination pour déchets solides urbains en fosse d'élimination (9) utilisant un système de pyrolysation amovible (1), en particulier pour le traitement thermique "in situ" de déchets solides urbains en fosse d'élimination (9) avec récupération d'énergie, ledit système de pyrolysation amovible (1) comprenant au moins une cloche de chauffage transférable (3) apte à définir au moins une chambre de pyrolysation (5) pour soumettre à une réaction de pyrolyse de chaque zone (7) desdits déchets, ladite cloche de chauffage transférable (3) étant de préférence composée d'au moins une couche de matériel résistant à des températures élevées et dotée de moyens de chauffage à haute température de ladite chambre de pyrolysation (5), **caractérisé par** le fait de comprendre les phases de :
a) délimiter au moins une de lesdites zone de pyrolysation (7) dans ladite fosse d'élimination (9) au moyen de sillons périmétriques (19), ladite zone (7) ayant des dimensions et formes compatibles avec ladite chambre de pyrolysation (5) définie par ladite cloche de pyrolysation transférable (3);
b) caler ladite cloche de pyrolysation transférable (3) en position de travail au-dessus de ladite zone (7) à traiter;
c) entre ladite superficie externe de ladite cloche (3) et lesdites parois environnantes desdits sillons (19), disposer ladite couche de matériel isolant;
d) activer lesdits moyens de chauffage à haute température de ladite chambre de pyrolysation (5) et démarrer ladite réaction de pyrolyse desdits déchets de ladite zone (7);
e) actionner des mélangeurs (18) pour faire re-circuler lesdits gaz de réaction à l'intérieur de ladite chambre de pyrolysation (5) et pour déplacer lesdits déchets compactés dans ladite zone (7) à traiter;
f) simultanément extraire lesdits gaz de pyrolyse produits dans ladite chambre de pyrolysation (5) au moyen dudit conduit d'extraction (27);
g) une fois terminée ladite réaction de pyrolyse de ladite zone (7), soulever et déplacer ladite cloche de pyrolysation transférable (3); et
h) répéter les phases précédentes pour une nouvelle zone (7) de ladite fosse d'élimination (9).

2. Procédure selon la revendication 1, **caractérisée par le fait que** ladite phase d) comprend la phase de dynamisation des résistances électriques (11).

3. Procédure selon la revendication 1, **caractérisée par** le fait de comprendre la phase d'introduction des réactifs de neutralisation à l'intérieur de ladite chambre de pyrolysation (5) au moyen du dit conduit d'introduction (29).
